# EUROPÄISCHE PATENTANMELDUNG

(11) **EP 3 467 516 A1**
(43) Veröffentlichungstag der Anmeldung: **10.04.2019**
(21) Anmeldenummer: 17465557.1
(22) Anmeldetag: 05.10.2017
(51) Int. Cl.: G01P 3/16, G01P 3/22, G01P 3/36, G01D 5/26, G01D 5/34

(54) **BESTIMMEN EINER WINKELGESCHWINDIGKEIT EINES OBJEKTS**

(71) Anmelder: Conti Temic microelectronic GmbH, 90411 Nürnberg (DE)
(72) Erfinder: AMARIEI, Cornel Marian, 087075 Floresti (RO)

(57) **Zusammenfassung**

Die Erfindung betrifft einen Drehgeber (1) zum Bestimmen einer Winkelgeschwindigkeit eines Objekts (3) bei Drehungen des Objekts (3) um eine Drehachse (5). Der Drehgeber (1) umfasst eine an dem Objekt (3) angeordnete Strahlungsquelle (7), die ein Strahlungsbündel (13) elektromagnetischer Strahlung abstrahlt, einen Strahlungsdetektor (9), der einen Auftreffbereich (17), in dem das von der Strahlungsquelle (7) abgestrahlte Strahlungsbündel (13) den Strahlungsdetektor (9) trifft, oder wenigstens eine von dem Auftreffbereich (17) abhängige Messgröße detektiert und einen an dem Objekt (3) angeordneten Detektorträger (11), der den Strahlungsdetektor (9) trägt und in einer zur Drehachse (5) senkrechten Radialrichtung (15) elastisch deformierbar ist. Die Strahlungsquelle (7) ist derart angeordnet und ausgerichtet, dass sie das Strahlungsbündel (13) zu dem Strahlungsdetektor (9) abstrahlt

## Beschreibung

Die Erfindung betrifft einen Drehgeber und ein Verfahren zum Bestimmen einer Winkelgeschwindigkeit eines Objekts bei Drehungen des Objekts um eine Drehachse.

Aus dem Stand der Technik sind beispielsweise Drehgeber bekannt, die eine Lichtquelle, einen Lichtempfänger und sich mit einem Objekt, dessen Winkelgeschwindigkeit bestimmt werden soll, mitdrehende optische Schlitze aufweisen, wobei die optischen Schlitze die Übertragung von Licht, das von der Lichtquelle ausgesendet wird, zu dem Lichtempfänger unterbrechen. Aus einer Messung der Zeiträume zwischen den Unterbrechungen der Lichtübertragung zwischen der Lichtquelle und dem Lichtempfänger wird die Winkelgeschwindigkeit des Objekts bei Drehungen um eine Drehachse ermittelt.

Der Erfindung liegt die Aufgabe zugrunde, einen insbesondere hinsichtlich der Kosten und des Herstellungsaufwands verbesserten Drehgeber und ein verbessertes Verfahren zum Bestimmen einer Winkelgeschwindigkeit eines Objekts bei Drehungen des Objekts um eine Drehachse anzugeben.

Die Aufgabe wird erfindungsgemäß durch einen Drehgeber mit den Merkmalen des Anspruchs 1 und durch ein Verfahren mit den Merkmalen des Anspruchs 10 gelöst.

Vorteilhafte Ausgestaltungen der Erfindung sind Gegenstand der Unteransprüche.

Ein erfindungsgemäßer Drehgeber zum Bestimmen einer Winkelgeschwindigkeit eines Objekts bei Drehungen des Objekts um eine Drehachse umfasst eine Strahlungsquelle, einen Strahlungsdetektor und einen Detektorträger. Die Strahlungsquelle ist an dem Objekt angeordnet und strahlt ein Strahlungsbündel elektromagnetischer Strahlung ab. Der Strahlungsdetektor detektiert einen Auftreffbereich, in dem das von der Strahlungsquelle abgestrahlte Strahlungsbündel den Strahlungsdetektor trifft, oder wenigstens eine von dem Auftreffbereich abhängige Messgröße. Der Detektorträger ist an dem Objekt angeordnet, trägt den Strahlungsdetektor und ist in einer zur Drehachse senkrechten Radialrichtung elastisch deformierbar. Die Strahlungsquelle ist derart angeordnet und ausgerichtet, dass sie das Strahlungsbündel zu dem Strahlungsdetektor abstrahlt.

Die Erfindung nutzt aus, dass auf den Detektorträger eine Zentrifugalkraft in der Radialrichtung wirkt, wenn sich das Objekt um die Drehachse dreht. Durch die Zentrifugalkraft wird der Detektorträger in der Radialrichtung deformiert, wodurch der Auftreffbereich des von der Strahlungsquelle abgestrahlten Strahlungsbündels in der Radialrichtung verschoben wird. Da die Zentrifugalkraft mit zunehmender Winkelgeschwindigkeit des Objekts zunimmt, nimmt auch die Verschiebung des Auftreffbereiches mit zunehmender Winkelgeschwindigkeit zu. Dies ermöglicht die Bestimmung der Winkelgeschwindigkeit durch eine Auswertung der Verschiebung des Auftreffbereiches oder einer davon abhängigen Messgröße. Da die Erfindung im Wesentlichen lediglich die Erfassung und Auswertung des Auftreffbereiches beziehungsweise dieser Messgröße erfordert, ermöglicht sie eine relativ einfache Herstellung des Drehgebers, die die Herstellungskosten des Drehgebers gegenüber den Herstellungskosten bekannter Drehgeber deutlich reduziert. Der direkte Zusammenhang zwischen der Verschiebung des Auftreffbereiches und der Winkelgeschwindigkeit ermöglicht ferner eine präzise und unabhängig von der momentanen Lage des Objekts durchführbare Bestimmung der Winkelgeschwindigkeit aus der Verschiebung des Auftreffbereiches beziehungsweise einer davon abhängigen Messgröße. Da die Winkelgeschwindigkeit durch einen optischen Sensor bestimmt wird, arbeitet der Drehgeber zudem im Wesentlichen verschleißfrei.

Eine Ausgestaltung der Erfindung sieht vor, dass der Detektorträger aus einem in der Radialrichtung elastisch deformierbaren Material gefertigt ist oder einen Abschnitt aufweist, der aus einem in der Radialrichtung elastisch deformierbaren Material gefertigt ist. Dies ermöglicht eine einfache und kostengünstige Realisierung eines in der Radialrichtung elastisch deformierbaren Detektorträgers.

Eine weitere Ausgestaltung der Erfindung sieht vor, dass die Strahlungsquelle das Strahlungsbündel in eine Strahlungsrichtung abstrahlt, die zumindest annähernd parallel zu der Drehachse ist. Dadurch wird die Bestrahlungsstärke des Auftreffbereiches vorteilhaft optimiert.

Eine weitere Ausgestaltung der Erfindung sieht vor, dass der Strahlungsdetektor wenigstens zwei Detektorflächen aufweist, die entlang der Radialrichtung nebeneinander angeordnet sind, und für jede Detektorfläche eine Strahlungsleistung der auf die Detektorfläche auftreffenden elektromagnetischen Strahlung der Strahlungsquelle erfasst. Beispielsweise liegen alle Detektorflächen in einer zur Drehachse senkrechten Ebene. Diese Ausgestaltung der Erfindung nutzt aus, dass eine Verschiebung des Auftreffbereiches bei geeigneter Anordnung der Detektorflächen die auf die Detektorflächen auftreffenden Strahlungsleistungen relativ zueinander ändert. Daher kann aus den relativen Strahlungsleistungen der Auftreffbereich ermittelt werden.

Weitergestaltungen der vorgenannten Ausgestaltung der Erfindung sehen vor, dass der Strahlungsdetektor genau zwei in der Radialrichtung nebeneinander angeordnete Detektorflächen aufweist, oder dass der Strahlungsdetektor zwei Flächenpaare in der Radialrichtung nebeneinander angeordneter Detektorflächen aufweist, wobei jede Detektorfläche eines Flächenpaares senkrecht zu der Radialrichtung neben einer Detektorfläche des anderen Flächenpaares angeordnet ist. Dabei bestrahlt die Strahlungsquelle beispielsweise jeweils alle Detektorflächen mit wenigstens annähernd gleichen Strahlungsleistungen, wenn sich das Objekt nicht um die Drehachse dreht. Diese Ausgestaltungen der Erfindung ermöglichen besonders einfache und kostengünstige Realisierungen des Strahlungsdetektors mit nur wenigen (nämlich zwei beziehungsweise vier) Detektorflächen. Alternativ kann der Strahlungsdetektor beispielsweise eine Vielzahl in der Radialrichtung nebeneinander angeordneter Detektorflächen aufweisen und für jede Detektorfläche erfassen, ob die Strahlungsleistung der auf die Detektorfläche auftreffenden elektromagnetischen Strahlung der Strahlungsquelle einen vorgegebenen Leistungsschwellenwert überschreitet. In diesem Ausführungsbeispiel wird der Auftreffbereich aus einer Position derjenigen Detektorfläche oder Detektorflächen ermittelt, für die die Strahlungsleistung den Leistungsschwellenwert überschreitet. Bei dieser Ausgestaltung der Erfindung wird ermittelt, welche Detektorfläche oder Detektorflächen jeweils momentan von dem Strahlungsbündel hauptsächlich bestrahlt werden, um aus der Position dieser Detektorfläche oder Detektorflächen den Auftreffbereich zu ermitteln. Dazu ist keine Erfassung der absoluten oder relativen Strahlungsleistungen für die einzelnen Detektorflächen erforderlich, sondern es wird lediglich erfasst, ob die jeweiligen Strahlungsleistungen einen vorgegebenen Leistungsschwellenwert überschreiten.

Das erfindungsgemäße Verfahren zum Bestimmen einer Winkelgeschwindigkeit eines Objekts bei Drehungen des Objekts um eine Drehachse sieht entsprechend vor, mit einem erfindungsgemäßen Drehgeber einen Auftreffbereich, in dem das von der Strahlungsquelle abgestrahlte Strahlungsbündel den Strahlungsdetektor des Drehgebers trifft, oder wenigstens eine von dem Auftreffbereich abhängige Messgröße zu detektieren und anhand des Auftreffbereiches oder der wenigstens einen Messgröße die Winkelgeschwindigkeit des Objekts zu ermitteln.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine perspektivische Darstellung eines ersten Ausführungsbeispiels eines Drehgebers,
FIG 2 eine Frontansicht eines Strahlungsdetektors und eines Detektorträgers des in Figur 1 dargestellten Drehgebers,
FIG 3 ein Blockdiagramm des in Figur 1 dargestellten Drehgebers,
FIG 4 Detektorflächen eines zweiten Ausführungsbeispiels eines Drehgebers,
FIG 5 eine perspektivische Darstellung eines dritten Ausführungsbeispiels eines Drehgebers,
FIG 6 eine Frontansicht eines Strahlungsdetektors und eines Detektorträgers des in Figur 5 dargestellten Drehgebers,
FIG 7 ein Blockdiagramm des in Figur 5 dargestellten Drehgebers.

Einander entsprechende Teile sind in den Figuren mit denselben Bezugszeichen versehen.

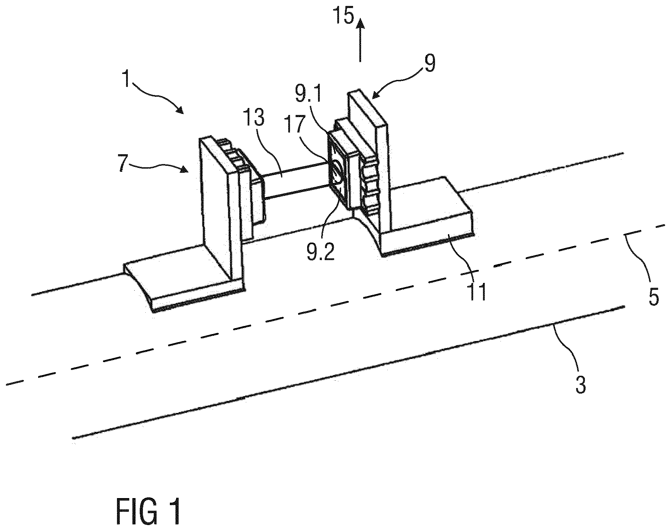

Figur 1 zeigt eine perspektivische Darstellung eines ersten Ausführungsbeispiels eines Drehgebers 1 zum Bestimmen einer Winkelgeschwindigkeit eines Objekts 3 bei Drehungen des Objekts 3 um eine Drehachse 5.

Das Objekt 3 ist beispielsweise eine Welle, deren Längsachse die Drehachse 5 ist.

Der Drehgeber 1 umfasst eine Strahlungsquelle 7, einen Strahlungsdetektor 9 und einen Detektorträger 11.

Die Strahlungsquelle 7 ist an dem Objekt 3 angeordnet und strahlt ein Strahlungsbündel 13 elektromagnetischer Strahlung in eine zu der Drehachse 5 parallelen Strahlungsrichtung zu dem Strahlungsdetektor 9 ab.

Der Detektorträger 11 ist an dem Objekt 3 angeordnet und trägt den Strahlungsdetektor 9. Der Detektorträger 11 ist in einer zur Drehachse 5 senkrechten Radialrichtung 15 elastisch deformierbar. Beispielsweise ist der Detektorträger 11 ganz oder teilweise aus einem in der Radialrichtung 15 elastisch deformierbaren Material gefertigt.

Der Strahlungsdetektor 9 detektiert einen Auftreffbereich 17, in dem das von der Strahlungsquelle 7 abgestrahlte Strahlungsbündel 13 den Strahlungsdetektor 9 trifft. Der Strahlungsdetektor 9 des in Figur 1 gezeigten Ausführungsbeispiels weist zwei Detektorflächen 9.1, 9.2 auf, die entlang der Radialrichtung 15 nebeneinander angeordnet sind. Der Strahlungsdetektor 9 erfasst für jede Detektorfläche 9.1, 9.2 eine Strahlungsleistung der auf die Detektorfläche 9.1, 9.2 auftreffenden elektromagnetischen Strahlung der Strahlungsquelle 7.

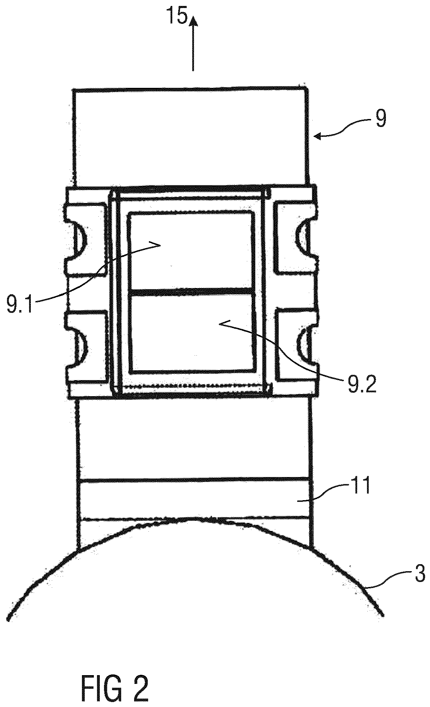

Figur 2 zeigt eine Frontansicht des Strahlungsdetektors 9 und des Detektorträgers 11 des in Figur 1 dargestellten Drehgebers 1.

Der Strahlungsdetektor 9 und die Strahlungsquelle 7 sind derart angeordnet, dass die Strahlungsquelle 7 beide Detektorflächen 9.1, 9.2 mit wenigstens annähernd gleichen Strahlungsleistungen bestrahlt, wenn sich das Objekt 3 nicht um die Drehachse 5 dreht. Wenn sich das Objekt 3 dreht, wirkt auf den Detektorträger 11 eine Zentrifugalkraft in der Radialrichtung 15. Durch die Zentrifugalkraft wird der Detektorträger 11 in der Radialrichtung 15 deformiert, wodurch der Auftreffbereich 17 des von der Strahlungsquelle 7 abgestrahlten Strahlungsbündels 13 in der Radialrichtung 15 verschoben wird. Durch die Verschiebung des Auftreffbereiches 17 ändern sich die auf die Detektorflächen 9.1, 9.2 auftreffenden Strahlungsleistungen relativ zueinander, da sich die Größen der jeweils bestrahlten Bereiche der Detektorflächen 9.1, 9.2 relativ zueinander ändern. Daher hängen die erfassten Strahlungsleistungen von dem Auftreffbereich 17 ab und die Veränderung ihrer relativen Größe ist ein Maß für die Verschiebung des Auftreffbereiches 17.

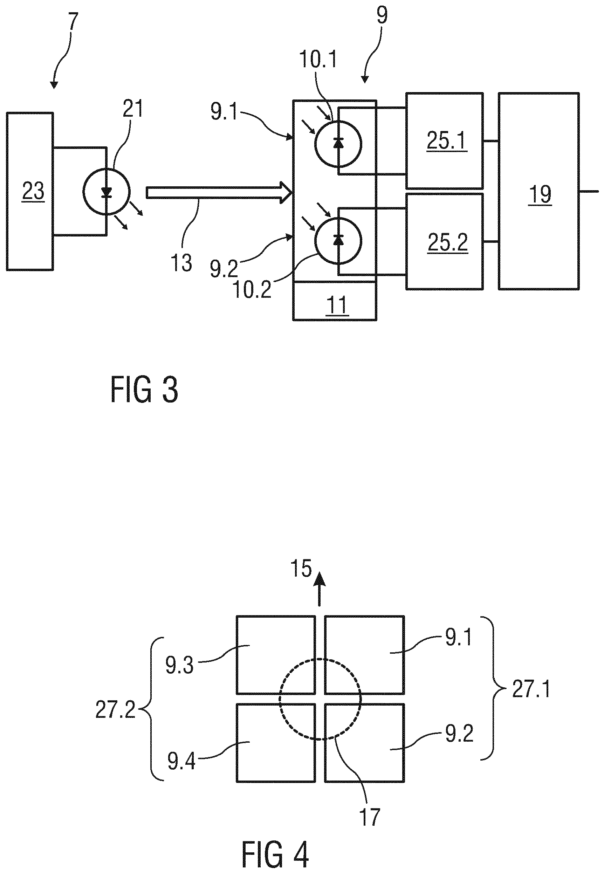

Da die Zentrifugalkraft mit zunehmender Winkelgeschwindigkeit des Objekts 3 zunimmt, nimmt auch die Verschiebung des Auftreffbereiches 17 mit zunehmender Winkelgeschwindigkeit zu. Daher kann die Winkelgeschwindigkeit des Objekts 3 aus der Verschiebung des Auftreffbereiches 17 beziehungsweise aus den erfassten Strahlungsleistungen ermittelt werden. Die Winkelgeschwindigkeit wird auf diese Weise mit einer Auswerteeinheit 19 (siehe Figur 3) bestimmt, die in den Strahlungsdetektor 9 integriert ist oder separat ausgeführt ist.

Figur 3 zeigt ein Blockdiagramm des in Figur 1 dargestellten Drehgebers 1. Die Strahlungsquelle 7 weist eine Strahlungsemissionseinheit 21 und eine Energieversorgungseinheit 23 zur Energieversorgung der Strahlungsemissionseinheit 21 auf. Die Strahlungsemissionseinheit 21 kann beispielsweise wenigstens eine Leuchtdiode, Laserdiode oder Glühlampe aufweisen. Die Energieversorgungseinheit 23 kann beispielsweise als eine Batterie ausgebildet sein. Die Strahlungsquelle 7 kann außerdem eine (nicht dargestellte) optische Abbildungseinheit zur Formung des Strahlungsbündels 13 aufweisen.

Der Strahlungsdetektor 9 weist für jede Detektorfläche 9.1, 9.2 eine Detektionseinheit 10.1, 10.2 zur Erfassung der auf die Detektorfläche 9.1, 9.2 auftreffenden Strahlungsleistung auf. Beispielsweise weisen die Detektionseinheiten 10.1, 10.2 jeweils wenigstens eine Photodiode auf. Insbesondere kann jede Detektorfläche 9.1, 9.2 eine Oberfläche einer Detektionseinheit 10.1, 10.2 sein.

Der Strahlungsdetektor 9 kann ferner für jede Detektorfläche 9.1, 9.2 eine Verstärker- und/oder Filtereinheit 25.1, 25.2 zum Verstärken und/oder Filtern der von den Detektionseinheiten 10.1, 10.2 erfassten Signale aufweisen.

Die von den Detektionseinheiten 10.1, 10.2 erfassten Signale werden, gegebenenfalls über die Verstärker- und/oder Filtereinheit 25.1, 25.2, der Auswerteeinheit 19 zugeführt und von dieser ausgewertet. Vorzugsweise normalisiert die Auswerteeinheit 19 die ihr zugeführten Signale, um Umgebungseinflüsse wie Temperatur- oder Feuchtigkeitseinflüsse oder Einflüsse einer Abnutzung von Drehgeberkomponenten auf die Signale zu reduzieren. Beispielsweise werden die Signale normalisiert, indem jeweils die Summe der beiden momentanen den Detektorflächen 9.1, 9.2 zugehörigen Signale durch die Differenz dieser Signale dividiert wird. Die Winkelgeschwindigkeit des Objekts 3 wird von der Auswerteeinheit 19 aus den (gegebenenfalls normalisierten) Signalen ermittelt. Dazu werden entweder weitere Parameter des Drehgebers 1, beispielsweise ein Abstand von der Drehachse 5, elastische Eigenschaften des Detektorträgers 11 und eine Masse des Strahlungsdetektor 9, verwendet, oder es werden Probeläufe des Objekts 3 mit bekannten Winkelgeschwindigkeiten durchgeführt, um eine Abhängigkeit der Signale der Detektionseinheiten 10.1, 10.2 von der Winkelgeschwindigkeit zu ermitteln.

Die Auswerteeinheit 19 kann als analoge Einheit zur analogen Auswertung der Signale oder als digitale Einheit zur digitalen Auswertung der Signale ausgeführt sein. Im Fall, dass sie als digitale Einheit ausgeführt ist, werden die Signale vor ihrer Auswertung durch einen Analog-Digital-Umsetzer digitalisiert.

Das anhand von den Figuren 1 bis 3 beschriebene Ausführungsbeispiel kann dahingehend abgewandelt werden, dass der Strahlungsdetektor 9 mehr als nur zwei Detektorflächen 9.1, 9.2 aufweist.

Figur 4 zeigt beispielhaft Detektorflächen 9.1 bis 9.4 eines zweiten Ausführungsbeispiels mit zwei Flächenpaaren 27.1, 27.2 in der Radialrichtung 15 nebeneinander angeordneter Detektorflächen 9.1 bis 9.4, wobei jede Detektorfläche 9.1 bis 9.4 eines Flächenpaares 27.1, 27.2 senkrecht zu der Radialrichtung 15 neben einer Detektorfläche 9.1 bis 9.4 des anderen Flächenpaares 27.1, 27.2 angeordnet ist. Die Strahlungsquelle 7 bestrahlt alle Detektorflächen 9.1 bis 9.4 mit wenigstens annähernd gleichen Strahlungsleistungen, wenn sich das Objekt 3 nicht um die Drehachse 5 dreht. Abgesehen von der Anzahl der Detektorflächen 9.1 bis 9.4 ist der Drehgeber 1 dieses Ausführungsbeispiels analog zu dem in den Figuren 1 bis 3 gezeigten Ausführungsbeispiel ausgeführt.

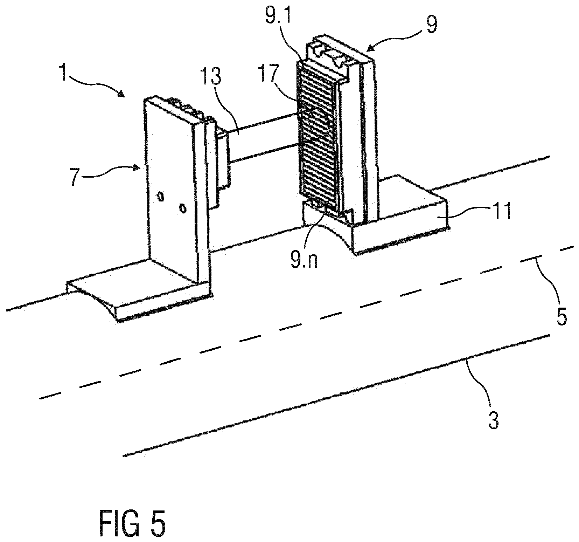

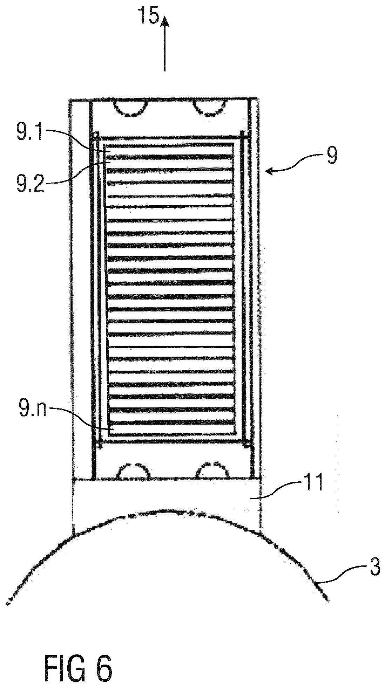

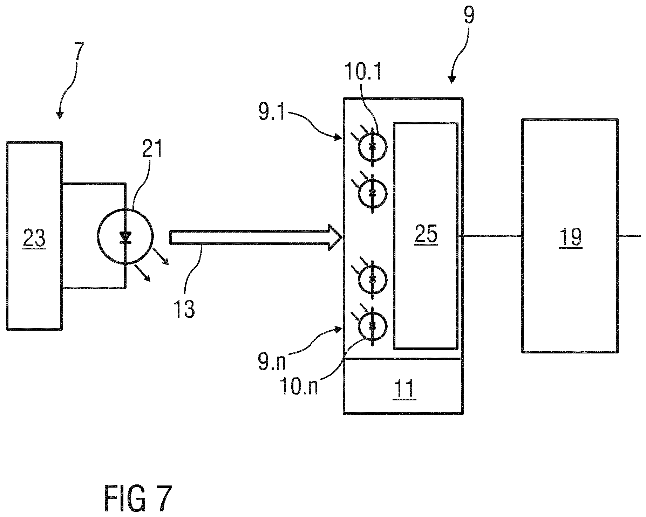

Die Figuren 5 bis 7 zeigen ein drittes Ausführungsbeispiel eines Drehgebers 1. Dabei zeigt Figur 5 eine perspektivische Darstellung des Drehgebers 1, Figur 6 zeigt eine Frontansicht des Strahlungsdetektors 9 und des Detektorträgers 11 des Drehgebers 1, und Figur 7 zeigt ein Blockdiagramm des Drehgebers 1. Der Drehgeber 1 umfasst eine Strahlungsquelle 7, einen Strahlungsdetektor 9 und einen Detektorträger 11. Dieses Ausführungsbeispiel unterscheidet sich von dem anhand der Figuren 1 bis 3 beschriebenen Ausführungsbeispiel durch die Ausführung und Funktionsweise des Strahlungsdetektors 9. Die Strahlungsquelle 7 und der Detektorträger 11 sind wie in dem anhand der Figuren 1 bis 3 beschriebenen Ausführungsbeispiel ausgeführt und an einem Objekt 3 angeordnet.

Der Strahlungsdetektor 9 weist eine Vielzahl von Detektorflächen 9.1 bis 9.n auf, die entlang der Radialrichtung 15 nebeneinander angeordnet sind und eine deutlich geringere Ausdehnung in der Radialrichtung 15 aufweisen als die Detektorflächen 9.1, 9.2 des anhand der Figuren 1 bis 3 beschriebenen Ausführungsbeispiels. Der Strahlungsdetektor 9 erfasst für jede Detektorfläche 9.1 bis 9.n, ob die Strahlungsleistung der auf die Detektorfläche 9.1 bis 9.n auftreffenden elektromagnetischen Strahlung einen vorgegebenen Leistungsschwellenwert überschreitet. In diesem Ausführungsbeispiel wird der Auftreffbereich 17 des Strahlenbündels 13 auf dem Strahlungsdetektor 9 aus der Position derjenigen Detektorfläche 9.1 bis 9.n oder den Positionen derjenigen Detektorflächen 9.1 bis 9. n ermittelt, für die die Strahlungsleistung den Leistungsschwellenwert überschreitet. Bei dieser Ausgestaltung der Erfindung wird also ermittelt, welche Detektorfläche 9.1 bis 9.n oder Detektorflächen 9.1 bis 9.n jeweils momentan von dem Strahlungsbündel 13 hauptsächlich bestrahlt werden, um aus der Position dieser Detektorfläche 9.1 bis 9.n oder Detektorflächen 9.1 bis 9.n den Auftreffbereich 17 zu ermitteln.

Die Detektorflächen 9.1 bis 9.n sind beispielsweise die Oberflächen von Detektionseinheiten 10.1 bis 10.n, die einen Zeilensensor bilden, beispielsweise einen CCD-, CMOS- oder anderen Zeilensensor. Die Signale der Detektionseinheiten 10.1 bis 10.n werden optional durch eine Verstärker- und/oder Filtereinheit 25 verstärkt und/oder gefiltert und einer digitalen Auswerteeinheit 19 zugeführt, die aus den Signalen die Winkelgeschwindigkeit des Objekts 3 ermittelt. Durch die digitale Bestimmung des Auftreffbereichs 17 wird der Drehgeber 1 dieses Ausführungsbeispiels durch Rausch- und Umgebungseinflüsse kaum beeinträchtigt.

Alternativ zu den oben beschriebenen Ausführungsbeispielen mit jeweils wenigstens zwei Detektorflächen 9.1 bis 9.n kann der Strahlungsdetektor 9 auch nur eine Detektorfläche 9.1 aufweisen und dazu ausgestaltet sein, direkt den Auftreffbereich 17 des Strahlungsbündels 13 auf der Detektorfläche 9.1 zu ermitteln. Beispielsweise kann der Strahlungsdetektor 9 als ein so genannter Position Sensitive Detector (PSD) ausgebildet sein.

In allen hier beschriebenen Ausführungsbeispielen kann die Strahlungsquelle 7 insbesondere als eine Lichtquelle ausgeführt sein, die sichtbares Licht abstrahlt.

### Bezugszeichenliste

- 1: Drehgeber
- 3: Objekt
- 5: Drehachse
- 7: Strahlungsquelle
- 9: Strahlungsdetektor
- 9.1 bis 9.n: Detektorfläche
- 10.1 bis 10.n: Detektionseinheit
- 11: Detektorträger
- 13: Strahlungsbündel
- 15: Radialrichtung
- 17: Auftreffbereich
- 19: Auswerteeinheit
- 21: Strahlungsemissionseinheit
- 23: Energieversorgungseinheit
- 25, 25.1, 25.2: Verstärker- und/oder Filtereinheit
- 27.1, 27.2: Flächenpaar

## Patentansprüche

1. Drehgeber (1) zum Bestimmen einer Winkelgeschwindigkeit eines Objekts (3) bei Drehungen des Objekts (3) um eine Drehachse (5), der Drehgeber (1) umfassend
- eine an dem Objekt (3) angeordnete Strahlungsquelle (7), die ein Strahlungsbündel (13) elektromagnetischer Strahlung abstrahlt,
- einen Strahlungsdetektor (9), der einen Auftreffbereich (17), in dem das von der Strahlungsquelle (7) abgestrahlte Strahlungsbündel (13) den Strahlungsdetektor (9) trifft, oder wenigstens eine von dem Auftreffbereich (17) abhängige Messgröße detektiert und
- einen an dem Objekt (3) angeordneten Detektorträger (11), der den Strahlungsdetektor (9) trägt und in einer zur Drehachse (5) senkrechten Radialrichtung (15) elastisch deformierbar ist,
- wobei die Strahlungsquelle (7) derart angeordnet und ausgerichtet ist, dass sie das Strahlungsbündel (13) zu dem Strahlungsdetektor (9) abstrahlt.

2. Drehgeber (1) nach Anspruch 1,
**dadurch gekennzeichnet, dass** der Detektorträger (11) aus einem in der Radialrichtung (15) elastisch deformierbaren Material gefertigt ist oder einen Abschnitt aufweist, der aus einem in der Radialrichtung (15) elastisch deformierbaren Material gefertigt ist.

3. Drehgeber (1) nach einem der vorhergehenden Ansprüche,
**dadurch gekennzeichnet, dass** die Strahlungsquelle (7) das Strahlungsbündel (13) in eine Strahlungsrichtung abstrahlt, die zumindest annähernd parallel zu der Drehachse (5) ist.

4. Drehgeber (1) nach einem der vorhergehenden Ansprüche,
**dadurch gekennzeichnet, dass** der Strahlungsdetektor (9) wenigstens zwei Detektorflächen (9.1 bis 9.n) aufweist, die entlang der Radialrichtung (15) nebeneinander angeordnet sind, und für jede Detektorfläche (9.1 bis 9.n) eine Strahlungsleistung der auf die Detektorfläche (9.1 bis 9.n) auftreffenden elektromagnetischen Strahlung der Strahlungsquelle (7) erfasst.

5. Drehgeber (1) nach Anspruch 4,
**dadurch gekennzeichnet, dass** alle Detektorflächen (9.1 bis 9.n) in einer zur Drehachse (5) senkrechten Ebene liegen.

6. Drehgeber (1) nach Anspruch 4 oder 5,
**dadurch gekennzeichnet, dass** der Strahlungsdetektor (9) genau zwei in der Radialrichtung (15) nebeneinander angeordnete Detektorflächen(9.1, 9.2) aufweist.

7. Drehgeber (1) nach Anspruch 4 oder 5,
**dadurch gekennzeichnet, dass** der Strahlungsdetektor (9) zwei Flächenpaare in der Radialrichtung (15) nebeneinander angeordneter Detektorflächen (9.1 bis 9.4) aufweist, wobei jede Detektorfläche (9.1 bis 9.4) eines Flächenpaares senkrecht zu der Radialrichtung (15) neben einer Detektorfläche (9.1 bis 9.4) des anderen Flächenpaares angeordnet ist.

8. Drehgeber (1) nach Anspruch 6 oder 7,
**dadurch gekennzeichnet, dass** die Strahlungsquelle (7) alle Detektorflächen (9.1, 9.2 beziehungsweise 9.1 bis 9.4) mit wenigstens annähernd gleichen Strahlungsleistungen bestrahlt, wenn sich das Objekt (3) nicht um die Drehachse (5) dreht.

9. Drehgeber (1) nach Anspruch 4 oder 5,
**dadurch gekennzeichnet, dass** der Strahlungsdetektor (9) eine Vielzahl in der Radialrichtung (15) nebeneinander angeordneter Detektorflächen (9.1 bis 9.n) aufweist, und für jede Detektorfläche (9.1 bis 9.n) erfasst, ob die Strahlungsleistung der auf die Detektorfläche (9.1 bis 9.n) auftreffenden elektromagnetischen Strahlung der Strahlungsquelle (7) einen vorgegebenen Leistungsschwellenwert überschreitet.

10. Verfahren zum Bestimmen einer Winkelgeschwindigkeit eines Objekts (3) bei Drehungen des Objekts (3) um eine Drehachse (5), wobei
- mit einem gemäß einem der vorhergehenden Ansprüche ausgebildeten Drehgeber (1) ein Auftreffbereich (17), in dem das von der Strahlungsquelle (7) abgestrahlte Strahlungsbündel (13) den Strahlungsdetektor (9) des Drehgebers (1) trifft, oder wenigstens eine von dem Auftreffbereich (17) abhängige Messgröße detektiert wird und
- anhand des Auftreffbereiches (17) oder der wenigstens einen Messgröße die Winkelgeschwindigkeit des Objekts (3) ermittelt wird.
